# EUROPEAN PATENT APPLICATION

(11) **EP 4 712 297 A1**
(43) Date of publication of application: **18.03.2026**
(21) Application number: 24850696.6
(22) Date of filing: 25.06.2024
(51) Int. Cl.: H02J 7/00

(54) **ENERGY STORAGE BATTERY AND CONTROL METHOD THEREFOR**

(30) Priority: 10.08.2023 CN 202311005064
(71) Applicant: SolaX Power Network Technology (Zhejiang) Co., Ltd., Zhejiang 311599 (CN)
(72) Inventor: YAO, Zhenfei, Hangzhou, Zhejiang 311599 (CN); SONG, Su, Hangzhou, Zhejiang 311599 (CN)
(74) Representative: Berggren Oy
(86) International application number: PCT/CN2024/101303
(87) International publication number: WO 2025/031045

(57) **Abstract**

An energy storage battery and a control method thereof. The energy storage battery includes battery groups connected in parallel, and each battery group includes batteries connected in series. Each battery includes a charge and discharge circuit, including a storage battery, a first switch, and a second switch, and the first switch and the second switch are used to control conduction of a connection line between two batteries. The batteries are connected in series to form the battery groups, and the battery groups are connected in parallel to form the energy storage battery, such that when the energy storage battery operates, each battery independently controls the on-off of its first switch and second switch to control the conduction of connection lines between the battery and other batteries, thereby allowing each battery of the energy storage battery to be freely extended. When a certain battery has a fault, it is merely required to control the battery group including the battery and to disconnect and repair the faulty battery, thus improving the overall operation efficiency of the energy storage battery.

## Description

This application claims priority to the Chinese patent application NO. 202311005064.6 filed with CNIPA on August 10, 2023, and entitled "ENERGY STORAGE BATTERY AND CONTROL METHOD THEREOF", the entire contents of which are incorporated by reference into this application.

### Technical Field

The present invention relates to the field of distribution technology, and in particular to an energy storage battery and a control method thereof.

### Background

Electrochemical energy storage has experienced rapid growth in recent years, with increasing market demand. Short-term power outages caused by energy storage system failures can severely impact both users' experience and economic benefits. Therefore, when an energy storage system is designed, fault tolerance and scalability should be fully considered at every stage. Commercially available energy storage systems typically consist of an inverter and an energy storage battery. The energy storage battery is composed of a battery management system and multiple batteries.

A certain existing energy storage battery is a single integral battery and is not expandable. To expand a capacity or increase a voltage platform, the entire energy storage battery needs to be replaced. In addition, the single integral energy storage battery has a low fault tolerance rate. When a component or battery cell in the energy storage battery fails, an entire system needs to stop working and the entire energy storage battery needs to be repaired or even scrapped, leading to low system operation efficiency and high maintenance cost.

### Summary

The present invention provides an energy storage battery and a control method thereof, to address technical problems of low fault tolerance and high maintenance cost of energy storage batteries in existing energy storage systems.

In order to address the above technical problems, some embodiments of the present invention provide an energy storage battery. The energy storage battery includes a plurality of battery groups connected in parallel, and each of the battery groups includes a plurality of batteries connected in series.

Each battery includes a charge and discharge circuit, the charge and discharge circuit includes a storage battery, a first switch, and a second switch; and the first switch and the second switch are used to control conduction of a connection line between two of the plurality of batteries.

In the present invention, the batteries are connected in series to form a battery group, and the battery groups are connected in parallel to form an energy storage battery. During operation of the energy storage battery, each battery's first switch and second switch are independently controlled to turn on or turn off, thereby controlling electrical connection between each battery's connection circuit and the remaining batteries. This allows for free expansion of individual batteries in the energy storage battery, and further allows for removing or adding batteries without affecting the operation of the batteries in other battery groups in the energy storage battery. When a battery fails, only the battery group including the faulty battery needs to be controlled, so that the faulty battery is powered down and repaired, without stopping the operation of the entire energy storage battery. This improves the overall operating efficiency and fault tolerance of the energy storage battery.

Further, each battery includes a positive terminal and a negative terminal, wherein in the charge and discharge circuit of the battery, a positive electrode of the storage battery is connected to the positive terminal, and a negative electrode of the storage battery is connected to the negative terminal; and the first switch is arranged between the positive electrode of the storage battery and the positive terminal, and the second switch is arranged between the negative electrode of the storage battery and the negative terminal.

Further, each battery further includes a charge and discharge limiting branch, and the charge and discharge limiting branch is connected in parallel with the first switch.

Further, the charge and discharge limiting branch includes a charge limiting branch and a discharge limiting branch, and the charge limiting branch and the discharge limiting branch are connected in parallel;
wherein the charge limiting branch includes a first diode and a fourth switch, wherein the first diode and the fourth switch are connected in series between the positive electrode of the storage battery and the positive terminal, and a positive electrode of the first diode is connected to the positive electrode of the storage battery, and
the discharge limiting branch includes a second diode and a fifth switch, the second diode and the fifth switch are connected in series between the positive electrode of the storage battery and the positive terminal, and a positive electrode of the second diode is connected to the positive electrode of the storage battery.

Further, each battery further includes a precharge branch, and the pre-charge branch is connected in parallel with the first switch.

Further, the pre-charge branch includes a pre-charge resistor and a third switch, and the pre-charge resistor and the third switch are connected in series between the positive electrode of the storage battery and the positive terminal.

Further, the energy storage battery adopts a controller area network (CAN) bus architecture to connect the plurality of battery groups, one battery from the plurality of battery groups is set as a master battery, and remaining batteries from the plurality of battery groups are set as slave batteries.

In a second aspect, the present invention provides a method for balancing charge and discharge of an energy storage battery, which is applicable to the energy storage battery. The method includes:
activating the energy storage battery to enter a discharge mode; when detecting that the energy storage battery has fully discharged, switching the energy storage battery to a charge mode according to a seamless switching operation; when detecting that the energy storage battery is fully charged, switching the energy storage battery to a discharge mode according to the seamless switching operation;
after the energy storage battery enters the discharge mode, performing a discharge voltage balancing operation on the plurality of battery groups according to a first voltage, and performing a full discharge operation based on state of charge (SOC) values of all of the plurality of batteries in each battery group, wherein the first voltage is a maximum voltage among voltages of the battery groups in the energy storage battery that are not fault;
after the battery enters the charge mode, performing a charge voltage balancing operation on the plurality of battery groups according to a second voltage, and performing a full charge operation based on SOC values of all of the plurality of batteries in each battery group, wherein the second voltage is a minimum voltage among the voltages of the battery groups in the energy storage battery that are not fault.

Further, the performing of the discharge voltage balancing operation on the plurality of battery groups according to the first voltage includes:
determining a first voltage of the energy storage battery at present, wherein the first voltage is a maximum voltage among voltages of the battery groups in the energy storage battery that are not fault;
selecting, among battery groups in the plurality of battery groups that have not been powered on, second battery groups that satisfy a power-on condition based on the first voltage and a preset first voltage difference;
limiting a total charge or discharge current of the energy storage battery according to the number of currently online battery groups in the plurality of battery groups, and powering on the second battery groups; and
after the second battery groups have been powered on, cancelling the limiting of the total charge or discharge current of the energy storage battery, completing the discharge voltage balancing operation.

Further, the performing of the charge voltage balancing operation on the plurality of battery groups according to the second voltage includes:
determining a second voltage of the energy storage battery at present, wherein the second voltage is a minimum voltage among voltages of the battery groups in the energy storage battery that are not fault;
selecting, among battery groups in the plurality of battery groups that have not been powered on, third battery groups that satisfy the power-on condition based on the second voltage and a preset second voltage difference;
limiting a total charge or discharge current of the energy storage battery according to the number of currently online battery groups in the plurality of battery groups, and powering on the second battery groups; and
after the second battery groups have been powered on, cancelling the limiting of the total charge or discharge current of the energy storage battery, completing the charge voltage balancing operation.

In a third aspect, the present invention further provides a method for removing a fault in the energy storage battery, which is applicable to the energy storage battery. The method includes:
activating the energy storage battery to enter a discharge mode; when detecting that the energy storage battery has fully discharged, switching the energy storage battery to a charge mode according to a seamless switching operation; when detecting that the energy storage battery is fully charged, switching the energy storage battery to a discharge mode according to the seamless switching operation;
after entering the discharge mode or the charge mode, when a faulty battery group is detected, performing a current limiting operation on battery groups in the plurality of battery groups other than the faulty battery group according to the number of powered-on battery groups in the plurality of battery groups that have been powered on and a first current threshold to limit a total charge or discharge current; and
transmitting a power-down instruction to the faulty battery group, and subsequent to the faulty battery group is powered down, and then transmitting a current limiting cancellation instruction to each of the battery groups that have been powered on; wherein the faulty battery group is a battery group that has been powered on and has at least one battery with a serious fault.

In a fourth aspect, the present invention further provides a method for seamlessly switching of charging and discharging of an energy storage battery, which is applicable to the energy storage battery. The method includes:
activating the energy storage battery to enter a discharge mode; when detecting that the energy storage battery has fully discharged, switching the energy storage battery to a charge mode according to a seamless switching operation; when detecting that the energy storage battery is fully charged, switching the energy storage battery to a discharge mode according to the seamless switching operation; and
wherein the seamless switching operation includes: when detecting a first battery group that is in a powered-on state but does not satisfy a power-on condition, transmitting a control instruction to a first battery, wherein the first battery is a battery arranged as the first one among the plurality of batteries in the first battery group; adjusting the charge and discharge circuit by the first battery according to the control instruction and a switching operation, wherein the switching operation includes transitioning from discharging to charging and transitioning from charging to discharging.

Further, the adjusting of the charge and discharge circuit by the first battery according to the control instruction and the switching operation includes:
when the switching operation is transitioning from discharging to charging, closing the fifth switch of the first battery to access the charge limiting branch having the second diode, and opening the first switch; and
when the switching operation is transitioning from charging to discharging, closing the fourth switch of the first battery to access the discharge limiting branch having the first diode, and opening the first switch.

Further, the method further includes a second power-on operation after the seamless switching operation, wherein the second power-on operation includes:
closing the second switch of a third battery and the fifth switch of the first battery in each of the plurality of battery groups that meets the power-on condition; and
closing the second switch of the third battery and the first switch of the first battery in each of the plurality of battery groups that does not meet the power-on condition;
wherein the third battery is a battery arranged as the last one among the plurality of batteries in each battery group, and the first battery is a battery arranged as the first one among the plurality of batteries in each battery group.

In a fifth aspect, the present invention further provides a method for controlling an energy storage battery, which is applicable to the energy storage battery. The method includes:
receiving a power-on instruction, so that the master battery of each battery group performs a first power-on operation on all of the plurality of batteries of each battery group according to the power-on instruction, and entering a discharge mode after all of the plurality of batteries have been powered on; when detecting that the energy storage battery has fully discharged, entering a charge mode according to a seamless switching operation; when detecting that the energy storage battery has fully charged, entering a discharge mode according to the seamless switching operation.

Further, after the energy storage battery enters the discharge mode, a discharge voltage balancing operation is performed on the plurality of battery groups according to a first voltage; and a full discharge operation is performed based on SOC values of all the plurality of batteries in each battery group; the first voltage is a maximum voltage among voltages of the battery groups in the energy storage battery that are not fault;
when entering the charge mode, a charge voltage balancing operation is performed on the plurality of battery groups according to a second voltage; and a full charge operation is performed based on SOC values of all of the plurality of batteries in each battery group, wherein the second voltage is a minimum voltage among the voltages of the battery groups in the energy storage battery that are not fault.

Further, the performing of the discharge voltage balancing operation on the plurality of battery groups according to the first voltage includes:
determining a first voltage of the energy storage battery at present, wherein the first voltage is a maximum voltage among voltages of the battery groups in the energy storage battery that are not fault;
selecting, among battery groups in the plurality of battery groups that have not been powered on, second battery groups that satisfy a power-on condition based on the first voltage and a preset first voltage difference;
limiting a total charge or discharge current of the energy storage battery according to the number of currently online battery groups in the plurality of battery groups, and powering on the second battery groups; and
after the second battery groups have been powered on, cancelling the limiting of the total charge or discharge current of the energy storage battery, completing the discharge voltage balancing operation.

Further, the performing of the charge voltage balancing operation on each battery group according to the second voltage includes:
determining a second voltage of the energy storage battery at present, wherein the second voltage is a minimum voltage among the voltages of the battery groups in the energy storage battery that are not fault;
selecting, among battery groups in the plurality of battery groups that have not been powered on, third battery groups that satisfy the power-on condition based on the second voltage and a preset second voltage difference;
limiting a total charge or discharge current of the energy storage battery according to the number of currently online battery groups in the plurality of battery groups, and powering on the second battery group; and
after the second battery groups have been powered on, cancelling the limiting of the total charge or discharge current of the energy storage battery, completing the charge voltage balancing operation.

Further, after entering a discharge mode or a charge mode, when a faulty battery group is detected, a current limiting instruction is transmitted to battery groups in the plurality of battery groups other than the faulty battery group according to the number of battery groups in the plurality of battery groups that have been powered on and a first current threshold to limit a total charge or discharge current; and a power-down instruction is transmitted to the faulty battery group, and subsequent to the faulty battery group being powered down, transmitting a current limit cancellation instruction to each of the battery groups that have been powered on; wherein the faulty battery group is a battery group that has been powered on and has at least one battery with a major fault.

Further, the seamless switching operation includes:
when detecting a first battery group that is in a powered-on state but does not satisfy a power-on condition, transmitting a control instruction to a first battery, wherein the first battery is a battery arranged as the first one among the plurality of batteries in the first battery group; and
adjusting the charge and discharge circuit by the first battery according to the control instruction and a switching operation, wherein the switching operation includes transitioning from discharging to charging and transitioning from charging to discharging.

Further, the adjusting of the charge and discharge circuit by the first battery according to the control instruction and the switching operation includes:
when the switching operation is transitioning from discharging to charging, closing the fifth switch of the first battery to access the charge limiting branch having the second diode, and opening the first switch; and
when the switching operation is transitioning from charging to discharging, closing the fourth switch of the first battery to access the discharge limiting branch having the first diode, and opening the first switch.

### Brief Description of the Drawings

FIG.1 is a schematic structural diagram of an energy storage battery provided by some embodiments of the present invention.
FIG.2 is an electrical diagram of a battery of an energy storage battery provided by some embodiments of the present invention.

The reference signs in the accompanying drawings are as follows:
1, charge and discharge circuit; 2, precharge branch; 3, charge and discharge limiting branch; 4, storage battery; 5, first switch; 6, second switch; 7, positive terminal; 8, negative terminal; 9, third switch; 10, fourth switch; 11, fifth switch; 12, first diode; 13, second diode; 14, precharge resistor.

### Detailed Description of the Embodiments

The following will clearly and completely describe the technical solutions in the embodiments of the present invention in conjunction with the accompanying drawings. Obviously, the described embodiments are only part of the embodiments of the present invention, not all of the embodiments. All other embodiments obtained by a person in the art based on the embodiments of the present invention without making any creative efforts shall fall within the scope of protection of the present invention.

### Embodiment 1

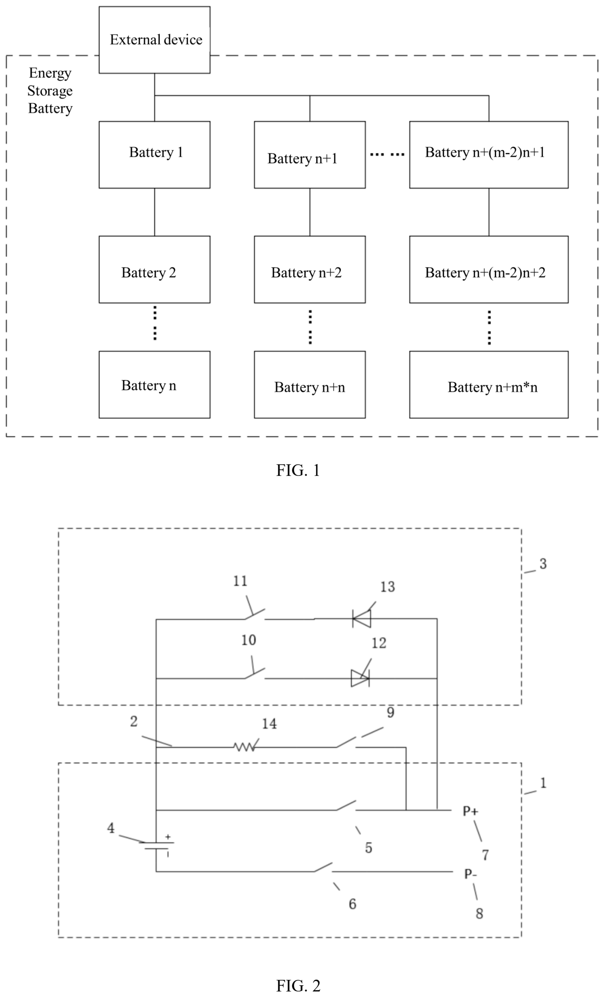

Please refer to FIG1. FIG. 1 is a schematic structural diagram of an energy storage battery provided by some embodiments of the present invention. The energy storage battery includes a plurality of battery groups connected in parallel, and each of the battery groups includes a plurality of batteries connected in series.

The battery includes a charge and discharge circuit 1. The charge and discharge circuit 1 includes a storage battery 4, a first switch 5, and a second switch 6. The first switch 5 and the second switch 6 are used to control conduction of a connection line between the two batteries.

In this embodiment, the energy storage battery adopts a controller area network (CAN) bus architecture to connect the plurality of battery groups. One battery from the battery groups is set as a master battery, and the remaining batteries are set as slave batteries.

In this embodiment, the energy storage battery is composed of *m* battery groups connected in parallel, each of the *m* battery groups includes *n* batteries. Within each battery group, any one battery is adaptively configured as a master battery, while the remaining batteries are configured as slave batteries. Configuration information sent by an external device calibrates the number of batteries in the energy storage battery, i.e., *m* battery groups connected in parallel each consisting of n batteries. Each battery is calibrated using a dual in-line package (DIP) switch on the battery, with the batteries being numbered from 1 to *n***m-1.*

In this embodiment, the external device includes an inverter and an external control device.

In this embodiment, the slave battery sends second battery information to the master battery according to a network. The master battery collects the second battery information of all the slave batteries, processes the second battery information and first battery information of the master battery, and sends the battery information of the entire energy storage battery to the external device.

In this embodiment, the energy storage device sends the received battery information of the energy storage battery to the external control device through the inverter, and obtains power-on and power-down instructions from the external control device through the inverter and sends the instructions to the master battery.

In this embodiment, several batteries are connected in series to form a battery group, and several battery groups are connected in parallel to form an energy storage battery. During operation of the energy storage battery, each battery's first switch 5 and second switch 6 are independently controlled to turn on or turn off, thereby controlling electrical connection between each battery's connection circuit and the remaining batteries. This allows for free expansion of individual batteries in the energy storage battery, and further allows for removing or adding batteries without affecting the operation of the batteries in other battery groups in the energy storage battery. When a battery fails, only the battery group including the faulty battery needs to be controlled, so that the faulty battery is powered down and repaired, without stopping the operation of the entire energy storage battery. This improves the overall operating efficiency and fault tolerance of the energy storage battery.

Please refer to FIG. 2. FIG. 2 is an electrical diagram of a battery of an energy storage battery provided by some embodiments of the present invention.

In this embodiment, the battery includes a positive terminal 7 and a negative terminal 8. In the charge and discharge circuit 1, a positive electrode of the storage battery 4 is connected to the positive terminal 7, and a negative electrode of the storage battery 4 is connected to the negative terminal 8. The first switch 5 is arranged between the positive electrode of the storage battery 4 and the positive terminal 7. The second switch 6 is arranged between the negative electrode of the storage battery 4 and the negative terminal 8.

In this embodiment, since each battery has an independent charge and discharge circuit 1 and a battery management system, each battery can serve as both the master battery and the slave battery. In this way, when a battery fails, only the battery group including the battery needs to be powered down and repaired without stopping the operation of the entire energy storage battery. This improves the operating efficiency of the entire energy storage battery and enhances fault tolerance.

In this embodiment, by providing an independent battery management system in each battery, each battery can serve as the master battery or slave battery. Consequently, when a single battery fails, there is no need to stop the operation of the entire energy storage battery, thereby improving the operating efficiency of the entire energy storage battery. In addition, there is no need to return the entire energy storage battery for repair, instead, only the current faulty battery needs to be repaired, thereby reducing repair costs.

In this embodiment, the battery further includes a charge and discharge limiting branch 3 configured to be connected in parallel with the first switch 5.

In this embodiment, the charge and discharge limiting branch 3 includes a charge limiting branch and a discharge limiting branch. The charge limiting branch and the discharge limiting branch are configured to be connected in parallel.

The charge limiting branch includes a first diode 12 and a fourth switch 10, wherein the first diode 12 and the fourth switch 10 are connected in series between the positive electrode of the storage battery 4 and the positive terminal 7, and the positive electrode of the first diode 12 is connected to the positive electrode of the storage battery 4.

The discharge limiting branch includes a second diode 13 and a fifth switch 11, wherein the second diode 13 and the fifth switch 11 are connected in series between the positive electrode of the storage battery 4 and the positive terminal 7, and the positive electrode of the second diode 13 is connected to the positive electrode of the storage battery 4.

In this embodiment, by providing the first diode 12 in the charge limiting branch, during a charge-to-discharge transition, the charge limiting branch is conducted via the fourth switch 10 to control a current flow within the battery, thereby preventing current backflow caused by an excessive voltage difference during the charge-to-discharge transition, thereby achieving a seamless switching of the battery from charging to discharging. By providing the second diode 13 in the charge limiting branch, during a discharge-to-charge transition, the discharge limiting branch is conducted via the fifth switch 11 to control the current flow within the battery, thereby preventing current backflow caused by an excessive voltage difference during the discharge-to-charge transition, thereby achieving a seamless switching of the battery from discharging to charging.

In this embodiment, the battery further includes a precharge branch 2. The precharge branch 2 is connected in parallel with the first switch 5.

In this embodiment, the precharge branch 2 includes a precharge resistor 14 and a third switch 9, and the precharge resistor 14 and the third switch 9 are connected in series between the positive electrode of the storage battery 4 and the positive terminal 7.

In this embodiment, by providing the precharge branch 2, the battery can automatically control an internal current through the precharge branch 2. When an external input current is too large, the fifth switch 11 is turned on to conduct the precharge branch 2 to charge the battery, thereby preventing damage to the battery caused by the excessive external input current. This achieves the effect of regulating the internal current of the battery.

In this embodiment, the first switch 5, the second switch 6, the third switch 9, the fourth switch 10, and the fifth switch 11 in the battery are all configured as relays, which automatically adjust opening or closing of the circuit according to the current inside the battery, thereby automatically adjusting the current inside the battery.

As a specific example of an embodiment of the present invention, the battery voltage platform is 50V, and each battery has its independent charge and discharge circuit 1 and battery management system. The charge and discharge circuit 1 includes Rly1, Rly2, and Rly3, where Rlyl and Rly2 are the first switch 5 and the second switch 6, respectively, and Rly3 is the third switch 9. A circuit where Rly3 is located is the precharge circuit. The first switch 5, the second switch 6, and the third switch 9 are all configured as relays.

In this embodiment, the energy storage battery adopts the CAN bus architecture to connect each battery group, and the battery information of the master battery in each battery group is calibrated by the configuration information sent by the external device, and the battery information of the slave battery is calibrated by the DIP switch on each battery.

In this embodiment, the entire energy storage battery adopts a CAN communication network architecture, and a battery connected to the inverter in the external device according to the CAN is adaptively set as the master battery, and the remaining batteries are set as slave batteries.

In this embodiment, the external device and each battery in the energy storage battery are connected via the CAN bus architecture. The battery connected to the external device according to the CAN is adaptively set as the master battery, and the remaining batteries are set as the slave batteries. The slave batteries are assigned different CAN Identifier (CANIDs)according to their own serial numbers and send the second battery information to the master battery via the intermediate CAN network. The master battery collects and processes the second battery information of all the slave batteries and its own first battery information, and sends the processed battery information to the external device.

In this embodiment, the external device includes a computer, an inverter, and other devices capable of sending instructions.

An embodiment of the present invention further provides a method for balancing charge and discharge of an energy storage battery, which is applicable to the energy storage battery, including:
Activating the energy storage battery to enter a discharge mode; when detecting that the energy storage battery has fully discharged, switching the energy storage battery to a charge mode according to a seamless switching operation; when detecting that the energy storage battery is fully charged, switching the energy storage battery to a discharge mode according to the seamless switching operation;
After the energy storage battery enters the discharge mode, performing a discharge voltage balancing operation on the plurality of battery groups according to a first voltage, and performing a full discharge operation based on state of charge (SOC) values of all of the plurality of batteries in each battery group, wherein the first voltage is a maximum voltage among voltages of the battery groups in the energy storage battery that are not fault;
After the energy storage battery enters the charge mode, performing a charge voltage balancing operation on the plurality of battery groups according to a second voltage, and performing a full charge operation based on the SOC values of all of the plurality of batteries in each battery group, wherein the second voltage is a minimum voltage among the voltages of the battery groups in the energy storage battery that are not fault.

In this embodiment, the energy storage battery further includes a pre-processing operation before receiving a power-on instruction. The pre-processing operation includes performing an initialization self-test detection on the energy storage battery; and after the energy storage battery passes the self-test, a pre-series connection operation and a pre-discharge power-on operation.

In this embodiment, the pre-series connection operation on the battery groups in the energy storage battery includes: transmitting, by the master battery, an instruction to turn on the second relay of the first battery (i.e., the 1^{st}, (n+1)^{th}, (2n+1)^{th},... (n*m-n+1)^{th} batteries) in each battery group including batteries connected in series, turn on the first switch 5 of the last battery (i.e., the n^{st}, (2n)^{th},... (m*n)^{th} batteries) of each battery group, and turning on the first switches 5 and second switches 6 of the remaining batteries.

In this embodiment, the pre-discharge power-on operation includes: selecting battery groups without battery failures in units of battery groups, calculating a total voltage of each battery group, obtaining a maximum voltage among the voltages of all of the plurality of battery groups as a first power-on voltage, and selecting all battery groups that satisfy a power-on condition based on the first power-on voltage, setting a pre-power-on instruction for the battery groups that meet the power-on conditions as 1, and setting a pre-power-on instruction for the battery groups that do not satisfy the power-on conditions as 2.

As a specific example of an embodiment of the present invention, the selection of all the battery groups that satisfy the power-on condition based on the first power-on voltage includes determining a battery group whose voltage difference with the first power-on voltage is within a default threshold as a battery group satisfying the power-on condition.

In this embodiment, each battery group is powered on by controlling the master battery, and a voltage of each battery is balanced, high-voltage batteries are selected to be incorporated into the energy storage system during discharge, and low-voltage batteries are selected to be incorporated into the energy storage system during charging, which fully release battery capacity and balancing battery voltages, thereby improving the battery charging and discharging efficiency. At the same time, the seamless switching operation avoids the inverter from sudden uncontrollable situations during the charge and discharge, and allows to complete a battery voltage switching while ensuring the stability of a voltage terminal.

In this embodiment, after the pre-processing operations are completed, the energy storage battery receives the power-on instruction and transmits the power-on instruction to the master battery of each battery group to perform a first power-on operation. The first power-on operation includes:according to an external instruction turning on the second switch 6 of the last battery of each battery group whose pre-power-on instruction is 1, and turning on the third switch 9 of the first battery of each battery group whose pre-power-on instruction is 1, to enter the precharge mode, and turning on the first switch 5 of the first battery of each battery group whose pre-power-on instruction is 1 after the precharge is completed.

In this embodiment, when all the battery groups whose pre-power-on instructions are 1 are powered on, the energy storage battery enters the discharge mode; otherwise, the energy storage battery returns to the pre-processing operations.

In this embodiment, the determination as to whether each battery group in the energy storage battery satisfies the power-on condition includes: obtaining a power-on voltage of the energy storage battery according to a charge or discharge mode of the energy storage battery, and determining a difference between the total voltage of each battery group in the energy storage battery and the power-on voltage; if the difference is within a preset threshold range, the battery group satisfies the power-on condition; if the difference is not within the preset threshold range, the battery group does not satisfy the power-on condition.

In this embodiment, the obtaining of the power-on voltage of the energy storage battery according to the charge or discharge mode of the energy storage battery is specifically that: if the charge or discharge mode is determined as the discharge mode, the power-on voltage is the maximum voltage among the voltages of the battery groups in the energy storage battery that are not fault; if the charge or discharge mode is determined as the charge mode, the power-on voltage is the minimum voltage among the voltages of the battery groups in the energy storage battery that are not fault.

In this embodiment, a pre-power-on instruction value is set for each battery group, and whether the battery group satisfies the power-on condition is determined according to its pre-power-on instruction value.

As a specific example of the embodiment of the present invention, if the pre-power-on instruction value is 1, the power-on condition is satisfied, and if the pre-power-on instruction value is 2, the power-on condition is not satisfied. The pre-power-on instruction of a battery group is used to determine whether the battery group in the energy storage battery satisfies the power-on condition.

In this embodiment, the performing of the discharge voltage balancing operation on each battery group according to the first voltage includes:
Determining a first voltage of the energy storage battery at present, wherein the first voltage is a maximum voltage among voltages of the battery groups in the energy storage battery that are not fault;
Selecting, among battery groups in the plurality of battery groups that have not been powered on, second battery groups that satisfy the power-on condition based on the first voltage and a preset first voltage difference;
Limiting a total charge or discharge current of the energy storage battery according to the number of currently online battery groups in the plurality of battery groups, and powering on the second battery groups; and
After the second battery group have been powered on, cancelling the limiting of the total charge or discharge current of the energy storage battery, completing the discharge voltage balancing operation.

In this embodiment, the battery with the highest voltage among all current non-fault battery groups that are not fault is selected as the first voltage. The voltages of all battery groups currently not satisfying the power-on condition are determined. If a difference between a voltage of a battery group that does not satisfy the power-on condition and the first voltage is within a first threshold range and the battery group is non-fault, the pre-power-on instruction for the battery group is set to 1. The current limiting operation is then performed on the energy storage battery based on the number of currently online battery groups to control the battery group to power on. The current limiting operation is cancelled after the power-on operation is completed.

In this embodiment, the current limiting operation on the energy storage battery according to the number of currently online battery groups includes: performing the current limiting operation on the total charge or discharge current in the energy storage battery, wherein the online battery group is a currently non-fault battery group whose batteries are all successfully powered on.

In this embodiment, the current limiting operation includes: transmitting a current limiting instruction to the master battery of each battery group according to the number of the powered-on battery groups and a first current threshold, so as to limit the total charge or discharge current.

As a specific example of an embodiment of the present invention, when the current limiting operation is performed, the total charge or discharge current of the energy storage battery is limited to (10 ampere (A)* the number of the online battery groups), wherein a online battery group is a battery group that has been powered on.

As a specific example of an embodiment of the present invention, the first threshold range is set to be greater than or equal to 2V and less than or equal to 4V. When the discharge voltage balancing operation is performed on the plurality of battery group according to the first voltage, the voltage of the battery group with the highest voltage currently is selected as the first voltage. All battery groups that do not currently satisfy the power-on condition are determined. That is, if a difference between the voltage of the second battery group whose pre-power-on instruction is 2 and the first voltage is greater than or equal to 2 voltages (V) or less than or equal to 4V, and the second battery group has no faults, the pre-power-on instruction of the second battery group is reset to 1, the total charge or discharge current in the energy storage battery is limited to (10*the number of the online battery groups) A, and a power-on instruction is transmitted to the second battery group. After the second battery group is powered on, the total charge or discharge current limiting is contacted.

In this embodiment, the performing of the charge voltage balancing operation on the plurality of battery groups according to the second voltage includes:
Determining a second voltage of the energy storage battery at present, wherein the second voltage is a minimum voltage of among voltages of the battery groups in the energy storage battery that are not fault;
Selecting, among battery groups in the plurality of battery groups that have not been powered on, third battery groups that satisfy the power-on condition based on the second voltage and a preset second voltage difference;
Limiting a total charge or discharge current of the energy storage battery according to the number of currently online battery groups in the plurality of battery groups, and powering on the second battery group; and
After the second battery groups have been powered on, cancelling the limiting of the total charge or discharge current of the energy storage battery, completing the charge voltage balancing operation.

In this embodiment, the lowest voltage among the voltages of all battery groups currently without faults is recorded as the second voltage. The voltages of all battery groups currently not satisfying the power-on condition are determined. If a difference between a voltage of a battery group that does not satisfy the power-on condition and the second voltage is within a second threshold range, and the battery group is non-fault, the pre-power-on instruction for that battery group is set to 1. The current limiting operation is then performed on the energy storage battery based on the number of currently online battery groups to control the battery group to power on. The current limiting operation is cancelled after the power-on operation is completed.

In this embodiment, the current limiting operation on the energy storage battery according to the number of currently online battery groups includes: performing the current limiting operation on the total charge or discharge current in the energy storage battery, wherein the online battery group is a currently non-fault battery group whose batteries are all successfully powered on.

In this embodiment, the current limiting operation includes: transmitting a current limiting instruction to the master battery of each battery group according to the number of the battery groups that have been powered on and the first current threshold, so as to limit the total charge or discharge current.

As a specific example of an embodiment of the present invention, when the current limiting operation is performed, the total charge or discharge current of the energy storage battery is limited to (10 A* the number of the online battery groups), wherein a online battery group is a battery group that has been powered on.

As a specific example of an embodiment of the present invention, the second threshold range is set to be greater than or equal to 2V and less than or equal to 4V. When the charge voltage balancing operation is performed on the plurality of battery groups according to the second voltage, the voltage of the battery group with the lowest voltage currently is selected as the second voltage. All battery groups that do not currently satisfy the power-on condition are determined. That is, if a difference between the voltage of the third battery group whose pre-power-on instruction is 2 and the second voltage is greater than or equal to 2V or less than or equal to 4V, and the third battery group has no faults, the pre-power-on instruction of the third battery group is reset to 1, the total charge or discharge current in the energy storage battery is limited to: (10*number of online battery groups) A, and a power-on instruction is transmitted to the battery group. After the third battery group is powered on, the total charge or discharge current limiting is cancelled.

In this embodiment, since some battery groups with excessive voltage difference are not been integrated into the system, these battery groups can be incorporated into the system during the charging and/or discharging processes when their voltage differences satisfy the preset threshold, to balance the battery voltage and increase the system capacity. When there is excessive voltage difference among the batteries in the battery group, the master battery can adjust an internal circuit of a high-voltage battery until voltages of batteries in the battery string are consistent.

An embodiment of the present invention further provides a method for removing a fault in the energy storage battery, which is applicable to the energy storage battery, including:
Activating the energy storage battery to enter a discharge mode; when detecting that the energy storage battery has fully discharged, switching the energy storage battery to a charge mode according to a seamless switching operation; when detecting that the energy storage battery is fully charged, switching the energy storage battery to a discharge mode according to the seamless switching operation; and
After entering the discharge mode or the charge mode, when a faulty battery group is detected, a current limiting operation is performed on battery groups in the plurality of battery groups other than the faulty battery group according to the number of battery groups in the plurality of battery groups that have been powered on and a first current threshold to limit a total charge or discharge current; and transmitting a power-down instruction to the faulty battery group, and subsequent to the faulty battery group being powered down, transmitting a current limiting cancellation instruction to each of the battery groups that have been powered on; wherein the faulty battery group is a battery group that has been powered on and has at least one battery with a major fault.

In this embodiment, the current limiting operation includes: transmitting a current limiting instruction to the master battery of each battery group according to the number of the battery groups that have been powered on and the first current threshold, to limit the total charge or discharge current.

As a specific example of an embodiment of the present invention, when the current limiting operation is performed, the total charge or discharge current of the energy storage battery is limited to (10*number of online battery groups) A, wherein the online battery group is a battery group that has been powered on.

In this embodiment, after entering the discharge mode, voltage differences are unavoidable within the energy storage battery due to differences in wiring harnesses and battery cells. In a single energy storage battery, if a voltage difference exists at discharge ends, when a voltage of a battery with a lowest voltage reaches a lower limit, the entire energy storage battery cannot continue to discharge. At this time, the remaining batteries still have some charge remaining, resulting in a low capacity for the entire energy storage battery. For an energy storage battery composed of multiple batteries, if a voltage of a certain battery cell reaches the lower limit at the discharge end, the master battery can power down the certain battery cell, allowing the remaining battery cells to continue discharging until a voltage of the last battery cell reaches the lower limit.

In this embodiment, the determination as to whether the energy storage battery has fully discharged includes:
When the energy storage batter enters the discharge mode, if an SOC value of a battery reaches a second threshold, performing a current limiting on a battery group where the battery is located, and powering down the battery that reaches the second threshold. After the battery has been power down, the current limiting operation is cancelled.

In this embodiment, when an SOC value of a battery in a battery group, whose SOC value is the last to reach the second threshold among batteries in the battery group, the conduction of the battery is retained, and a discharge current of the master battery of the battery group is limited to 0.

As a specific example of an embodiment of the present invention, when the SOC value of a battery in a current battery group reaches 0% during discharge, the master battery requests from the external device to limit the current battery group's discharge current to 10A, and then sends a power-down instruction to the battery with the SOC value of 0%. After it is confirmed that the battery with the SOC value of 0% has been powered down and electrically disconnected, the discharge current of the current battery group is restored. If an SOC value of a battery in the current battery group, whose SOC value is the last to reach the second threshold among batteries in the current battery group, is about to reach 0%, the battery remains conducted, and the master battery limits the discharge current of the current battery group to 0A.

In this embodiment, the power-down operation of the battery group includes: transmitting, by the master battery, a power-down instruction to the first battery and the last battery in the battery group, and controlling the first switch 5 in the first battery to turn off and controlling the second switch 6 in the last battery to turn off.

In this embodiment, when the external device sends a power-down instruction to the master battery, the master battery disconnects all batteries.

In this embodiment, the determination as to whether the energy storage battery is fully charged includes:
When the energy storage battery enters the charge mode, if an SOC value of a battery reaches a third threshold, performing a current limiting on a battery group where the battery is located, and powering down the battery that reaches the third threshold. After the battery has been powered down, the current limiting operation is cancelled.

In this embodiment, when the SOC value of a battery in a battery group, whose SOC value is the last to reach the third threshold among batteries in the battery group, the conduction of the battery is retained, and a charge current of the master battery of the battery group is limited to 0.

As a specific example of an embodiment of the present invention, when the SOC value of a battery in a current battery group reaches 100% during discharge, the master battery requests the external device to limit the charging current of the current battery group to 10A, and then sends a power-down instruction to the battery with the SOC value of 100%. After it is confirmed that the battery with the SOC value of 100% has been powered down and electrically disconnected, the charge current of the current battery group is restored. If an SOC value of a battery in the current battery group, whose SOC value is the last to reach the fourth threshold among batteries in the current battery group, is about to reach 100%, the battery remains conducted, and the master battery limits the charge current of the current battery group to 0A.

In this embodiment, when the external device sends a power-down instruction to the master battery, the master battery disconnects all batteries.

In this embodiment, by connecting several batteries in series and in parallel and eliminating the battery group containing a faulty battery, when a battery seriously fails and can no longer support discharging, the entire energy storage battery group undergoes a current limiting operations and the battery group containing the faulty battery is disconnected. The remaining battery groups can continue to operate normally, thereby increasing system redundancy. This prevents the entire energy storage system from shutting down when a single battery fails, thereby improving system operating efficiency.

An embodiment of the present invention further provides a method for seamlessly switching of charging and discharging of an energy storage battery, which is applicable to the energy storage battery, including:
Activating the energy storage battery to enter a discharge mode; when detecting that the energy storage battery has fully discharged, switching the energy storage battery to a charge mode according to a seamless switching operation; when detecting that the energy storage battery is fully charged, switching the energy storage battery to a discharge mode according to the seamless switching operation.

The seamless switching operation includes: when detecting a first battery group that is in a powered-on state but does not satisfy the power-on condition, transmitting a control instruction to a first battery, wherein the first battery is a battery arranged as the first one among the plurality of batteries in the first battery group; adjusting the charge and discharge circuit 1 by the first battery according to the control instruction and a switching operation, wherein the switching operation includes transitioning from discharging to charging and transitioning from charging to discharging.

In this embodiment, in this embodiment, the first battery group that is in the powered-on state but does not meet the power-on condition specifically refers to a battery group that is in the powered-on state but has the pre-power-on instruction of 2.

In this embodiment, when the energy storage battery is detected to have fully discharged, the charge and discharge circuit 1 is adjusted according to the control instruction and the switching operation, so that the energy storage battery enters the charge mode. The detection result that the energy storage battery is fully discharged includes that an internal current of the energy storage battery is detected to be negative.

In this embodiment, before entering the charge mode according to the seamless switching operation, a precharge power-on operation is performed on all plurality of battery groups. The precharge power-on operation includes: selecting battery groups without battery failures in units of battery groups, calculating a total voltage of each battery group, obtaining a minimum voltage among the voltages of all the battery groups as a second power-on voltage, and selecting all battery groups that satisfy a power-on condition based on the second power-on voltage, setting a pre-power-on instruction for the battery groups that meet the power-on conditions as 1, and setting a pre-power-on instruction for the battery groups that do not satisfy the power-on conditions as 2.

As a specific example of an embodiment of the present invention, the selection of the all battery groups that satisfy the power-on condition based on the second power-on voltage includes determining a battery group whose voltage difference with the second power-on voltage is within a default threshold as a battery group satisfying the power-on condition.

In this embodiment, when the energy storage battery is detected to be fully charged, the charge and discharge circuit 1 is adjusted according to the control instruction and the switching operation, so that the energy storage battery enters the discharge mode. The detection result that the energy storage battery is fully charged includes an internal current of the energy storage battery is detected to be positive, that is, the energy storage battery is fully charged.

In this embodiment, before entering the discharge mode according to the seamless switching operation, a pre-discharge power-on operation is performed on all the plurality of battery groups. The pre-discharge power-on operation includes: selecting battery groups without battery failures in units of battery groups, calculating a total voltage of each battery group, obtaining a maximum voltage among the voltages of all the battery groups as a first power-on voltage, and selecting all battery groups that satisfy a power-on condition based on the first power-on voltage, setting a pre-power-on instruction for the battery groups that meet the power-on conditions as 1, and setting a pre-power-on instruction for the battery groups that do not satisfy the power-on conditions as 2.

As a specific example of an embodiment of the present invention, the selection of all the battery groups that satisfy the power-on condition based on the first power-on voltage includes determining a battery group whose voltage difference with the first power-on voltage is within a default threshold as a battery group satisfying the power-on condition.

In this embodiment, the switching operation includes transitioning from discharging to charging and transitioning from charging to discharging. After the energy storage battery enters the seamless switching operation, the first battery closes the corresponding relay according to the type of the switching operation.

In this embodiment, the adjusting of the charge and discharge circuit 1 by the first battery according to the control instruction and the switching operation includes:
When the switching operation is transitioning from discharging to charging, conducting the first battery's charge circuit having the second diode 13, and opening the first switch 5;
When the switching operation is transitioning from charging to discharging, conducting the first battery's discharge circuit having the first diode 12, and opening the first switch 5.

In this embodiment, after the precharge power-on operation is completed, if it is detected that the first battery group is in the powered-on state but has the pre-power-on instruction of 2, a seamless switching operation is triggered. If the switching operation at this time is transitioning from discharging to charging, the master battery of the first battery group controls the first battery in the first battery group to turn on the second switch 6, so as to be electrically connected to the charge circuit, and to turn off the first switch 5.

After the seamless switching operation, a second power-on operation is further performed, including:
Closing the second switch 6 of the third battery and the fifth switch 11 of the first battery in all battery groups that meets the power-on condition; and
Closing the second switch 6 of the third battery and the first switch 5 of the first battery in each of the plurality of battery groups that does not meet the power-on condition.

The third battery is a battery arranged as the last one among the plurality of batteries in each battery group, and the first battery is a battery arranged as the first one among the plurality of batteries in each battery group.

In this embodiment, after the seamless switching operation of the first battery is completed, the second power-on operation is performed on all battery groups. After all the battery groups have been powered on, the charge mode is entered.

In this embodiment, after entering the charge mode, voltage differences are unavoidable within the energy storage battery due to differences in wiring harnesses and battery cells. In a battery system composed of multiple batteries, at the end of charge, when a voltage of a battery reaches an upper limit, the master battery powers the battery on, and the remaining batteries continue being charged until a voltage of the remaining last battery reaches the upper limit.

In this embodiment, the full charge of the energy storage battery includes:
When the energy storage battery enters the charge mode, if an SOC value of a battery reaches the third threshold, performing a current limiting on a battery group where the battery is located, and powering down the battery that reaches the third threshold. After the battery has been powered down, the current limiting operation is cancelled.

In this embodiment, when the SOC value of a battery in a battery group, whose SOC value is the last to reach the third threshold among batteries in the battery group, the conduction of the battery is retained, and a charge current of the master battery of the battery group is limited to 0.

As a specific example of an embodiment of the present invention, when the SOC value of a battery in a current battery group reaches 100% during discharge, the master battery requests from the external device to limit the current battery group's discharge current to 10A, and then sends a power-down instruction to the battery with the SOC value of 100%. After it is confirmed that the battery with the SOC value of 100% has been powered down and electrically disconnected, the discharge current of the current battery group is restored. If an SOC value of a battery in the current battery group, whose SOC value is the last to reach the fourth threshold among batteries in the current battery group, is about to reach 100%, the battery remains conducted, and the master battery limits the discharge current of the current battery group to 0A.

In this embodiment, during the switching between charge and discharge, a terminal voltage is kept stable by switching the charge circuit and the discharge circuit in the battery, and the switching of high-voltage and low-voltage batteries is completed at the same time to avoid a sudden loss of a terminal voltage connected to the external device caused by the switching between battery groups. The entire switching operation will not affect the normal operation of the battery.

In this embodiment, before the energy storage battery enters the discharge mode according to the seamless switching operation, the method further includes performing a pre-discharge power-on operation on all the plurality of battery groups.

An embodiment of the present invention further provides a method for controlling an energy storage battery, which is applicable to the energy storage battery, including:
Receiving a power-on instruction, so that the master battery of each battery group performs a first power-on operation on all of the plurality of batteries of each battery group according to the power-on instruction, and entering a discharge mode after all of the plurality of batteries have been powered on; when detecting that the energy storage battery has fully discharged, entering a charge mode according to a seamless switching operation; when detecting that the energy storage battery has fully charged, entering a discharge mode according to the seamless switching operation.

In this embodiment, when the battery enters the discharge mode, a discharge voltage balancing operation is performed on each battery group according to a first voltage; and a full discharge operation is performed based on the SOC values of all of the plurality of batteries in each battery group. The first voltage is a maximum voltage among voltages of the battery groups in the energy storage battery that are not fault.

When the battery enters the charge mode, a charge voltage balancing operation is performed on each battery group according to a second voltage; and a full charge operation is performed according to the SOC values of all of the plurality of batteries in each battery group. The second voltage is a minimum voltage among the voltages of the battery groups in the energy storage battery that are not fault.

In this embodiment, the energy storage battery utilizes a CAN bus architecture to connect the battery groups. One battery from the battery group is set as a master battery, and the remaining batteries are set as slave batteries. The energy storage battery comprises *m* battery groups connected in parallel, each of the *m* battery groups includes n batteries. Within each battery group, one battery is adaptively configured as a master battery, while the remaining batteries are configured as slave batteries. Configuration information sent by an external device calibrates the number of batteries in the energy storage battery, i.e., *m* battery groups connected in parallel each consisting of *n* batteries. Each battery is calibrated using a dual in-line package (DIP) switch on the battery, with the batteries being numbered from 1 to *n***m-1.*

In this embodiment, the external device and each battery in the energy storage battery are connected via the CAN bus architecture. The battery connected to the external device according to the CAN is adaptively set as the master battery, and the remaining batteries are set as the slave batteries. The slave batteries are assigned different CAN Identifier (CANIDs)according to their own serial numbers and send the second battery information to the master battery via the intermediate CAN network. The master battery collects and processes the second battery information of all the slave batteries and its own first battery information, and sends the processed battery information to the external device.

In this embodiment, after the energy storage battery is activated by receiving an instruction, a pre-processing operation is performed on the energy storage battery. The pre-processing operation includes performing an initialization self-test detection on the energy storage battery; and after the energy storage battery passes the self-test, a pre-series connection operation and a pre-discharge power-on operation the battery group are performed on the battery groups in the energy storage battery.

In this embodiment, the battery group enters the discharge mode after completing the pre-series connection operation and pre-discharge power-on operation, and performs a discharge voltage balancing operation on each battery group according to the first voltage.

In this embodiment, the performing of the discharge voltage balancing operation on each battery group according to the first voltage includes:
Determining the first voltage of the energy storage battery at present, wherein the first voltage is a maximum voltage among voltages of the battery groups in the energy storage battery that are not fault;
Selecting, among battery groups in the plurality of battery groups that have not been powered on, second battery groups that satisfy the power-on condition based on the first voltage and a preset first voltage difference;
Limiting a total charge or discharge current of the energy storage battery according to the number of currently online battery groups in the plurality of battery groups, and powering on the second battery groups;
After the second battery groups have been powered on, cancelling the limiting of the total charge or discharge current of the energy storage battery, completing the discharge voltage balancing operation.

In this embodiment, the performing of the charge voltage balancing operation on each battery group according to the second voltage includes:
Determining the second voltage of the energy storage battery at present, wherein the second voltage is a minimum voltage among the voltages of the battery groups in the energy storage battery that are not fault;
Selecting, among battery groups in the plurality of battery groups that have not been powered on, third battery groups that satisfy the power-on condition based on the second voltage and a preset second voltage difference;
Limiting a total charge or discharge current of the energy storage battery according to the number of currently online battery groups in the plurality of battery groups, and powering on the second battery group; and
After the second battery groups have been powered on, cancelling the limiting of the total charge or discharge current of the energy storage battery, completing the charge voltage balancing operation.

In this embodiment, after entering the discharge mode or the charge mode, when a faulty battery group is detected, a current limiting operation is performed on battery groups other than the faulty battery group according to the number of battery groups that have been powered on and a first current threshold to limit a total charge or discharge current; and a power-down instruction is transmitted to the faulty battery group, and subsequent to the faulty battery group being powered down, a current limiting cancellation instruction is transmitted to each battery group that has been powered on; wherein the faulty battery group is a battery group that has been powered on and has at least one battery with a major fault.

In this embodiment, the seamless switching operation includes:
When detecting a first battery group that is in a powered-on state but does not satisfy the power-on condition, transmitting a control instruction to the first battery. A first battery is a battery arranged as the first one in the first battery group.

Adjusting the charge and discharge circuit 1 by the first battery according to the control instruction and the switching operation, wherein the switching operation includes transitioning from discharging to charging and transitioning from charging to discharging.

In this embodiment, the adjusting of the charge and discharge circuit 1 by the first battery according to the control instruction and the switching operation includes:
When the switching operation is transitioning from discharging to charging, closing the fifth switch 11 of the first battery to access the discharge limiting branch with the second diode 13, and opening the first switch 5;
When the switching operation is transitioning from charging to discharging, closing the fourth switch 10 of the first battery to access the charge limiting branch with the first diode 12, and opening the first switch 5.

In this embodiment, after entering the discharge mode, voltage differences are unavoidable within the energy storage battery due to differences in wiring harnesses and battery cells. In a single energy storage battery, if a voltage difference exists at discharge ends, when a voltage of a battery with a lowest voltage reaches a lower limit, the entire energy storage battery cannot continue to discharge. At this time, the remaining batteries still have some charge remaining, resulting in a low capacity for the entire energy storage battery. For an energy storage battery composed of multiple batteries, if a voltage of a certain battery cell reaches the lower limit at the discharge end, the master battery can power down the certain battery cell, allowing the remaining battery cells to continue discharging until a voltage of the last battery cell reaches the lower limit.

In this embodiment, the determination as to whether the energy storage battery has fully discharged includes:
When the energy storage batter enters the discharge mode, if an SOC value of a battery reaches a second threshold, performing a current limiting on a battery group where the battery is located, and powering down the battery that reaches the second threshold. After the battery has been powered down, the current limiting operation is cancelled.

In this embodiment, when the SOC value of a battery in a battery group, whose SOC value is the last to reach the second threshold among batteries in the battery group, the conduction of the battery is retained, and a discharge current of the master battery of the battery group is limited to 0.

As a specific example of an embodiment of the present invention, when the SOC value of a battery in a current battery group reaches 0% during discharge, the master battery requests from the external device to limit the current battery group's discharge current to 10A, and then sends a power-down instruction to the battery with the SOC value of 0%. After it is confirmed that the battery with the SOC value of 0% has been powered down and electrically disconnected, the discharge current of the current battery group is restored. If an SOC value of a battery in the current battery group, whose SOC value is the last to reach the third threshold among batteries in the current battery group, is about to reach 0%, the battery remains conducted, and the master battery limits the discharge current of the current battery group to 0A.

In this embodiment, the power-down operation of the battery group includes: transmitting, by the master battery, a power-down instruction to the first battery and the last battery in the battery group, and controlling the first switch 5 in the first battery to turn off and controlling the second switch 6 in the last battery to turn off.

In this embodiment, when the external device sends a power-down instruction to the master battery, the master battery disconnects all batteries.

In this embodiment, the determination as to whether the energy storage battery is fully charged includes:
When the energy storage batter enters the charge mode, if an SOC value of a battery reaches a third threshold, performing a current limiting on a battery group where the battery is located, and powering down the battery that reaches the third threshold. After the battery has been powered down, the current limiting operation is cancelled.

In this embodiment, when the SOC value of a battery in a battery group, whose SOC value is the last to reach the third threshold among batteries in the battery group, the conduction of the battery is retained, and a charge current of the master battery of the battery group is limited to 0.

As a specific example of an embodiment of the present invention, when the SOC value of a battery in a current battery group reaches 100% during discharge, the master battery requests the external device to limit the charging current of the current battery group to 10A, and then sends a power-down instruction to the battery with the SOC value of 100%. After it is confirmed that the battery with the SOC value of 100% has been powered down and electrically disconnected, the charge current of the current battery group is restored. If an SOC value of a battery in the current battery group, whose SOC value is the last to reach the fourth threshold among batteries in the current battery group, is about to 100%, the battery remains conducted, and the master battery limits the charge current of the current battery group to 0A.

In this embodiment, when the external device sends a power-down instruction to the master battery, the master battery disconnects all batteries.

In this embodiment, after entering the discharge mode or the charge mode, when a faulty battery group is detected, a current limiting instruction is transmitted to the master battery of each battery group according to the number of battery groups that have been powered on and the first current threshold to limit the total charge or discharge current; and a power-down instruction is transmitted to the faulty battery group, and subsequent to the faulty battery group being powered down, and then a current limiting cancellation instruction is transmitted to the master battery of each battery group. The faulty battery group is a battery group that has been powered on and has at least one battery with a major fault.

In this embodiment, several batteries are connected in series to form a battery group, and several battery groups are connected in parallel to form an energy storage battery. During operation, each master battery collects information from all batteries in the battery group and sends it to an external device. This ensures that the removal and addition of modular batteries will not affect the information collection and operation of other battery groups in the energy storage battery. When a battery fails, it is only necessary to power down and repair the battery group including the faulty battery without stopping the operation of the entire energy storage battery. This improves the operating efficiency of the entire energy storage battery and improves fault tolerance. At the same time, the overall total capacity of the energy storage battery can be increased by connecting the batteries in series and in parallel, thereby improving the scalability of the energy storage battery.

The specific embodiments described above further illustrate the objectives, technical solutions, and beneficial effects of the present invention. It should be understood that the above descriptions are merely specific embodiments of the present invention and are not intended to limit the scope of protection of the present invention. In particular, it should be noted that any modifications, equivalent substitutions, improvements, etc., made within the spirit and principles of the present invention should be included within the scope of protection of the present invention for those skilled in the art.

## Claims

1. An energy storage battery, **characterized in that** the energy storage battery comprises a plurality of battery groups connected in parallel, and each of the battery groups comprises a plurality of batteries connected in series;
wherein each battery comprises a charge and discharge circuit, the charge and discharge circuit comprises a storage battery, a first switch, and a second switch; and the first switch and the second switch are used to control conduction of a connection line between two of the plurality of batteries.

2. The energy storage battery according to claim 1, **characterized in that** each battery comprises a positive terminal and a negative terminal, wherein in the charge and discharge circuit of the battery, a positive electrode of the storage battery is connected to the positive terminal, and a negative electrode of the storage battery is connected to the negative terminal; and the first switch is arranged between the positive electrode of the storage battery and the positive terminal, and the second switch is arranged between the negative electrode of the storage battery and the negative terminal.

3. The energy storage battery according to claim 1, **characterized in that** each battery further comprises a charge and discharge limiting branch, and the charge and discharge limiting branch is connected in parallel with the first switch.

4. The energy storage battery according to claim 3, **characterized in that** the charge and discharge limiting branch comprises a charge limiting branch and a discharge limiting branch, and the charge limiting branch and the discharge limiting branch are connected in parallel;
wherein the charge limiting branch comprises a first diode and a fourth switch, wherein the first diode and the fourth switch are connected in series between the positive electrode of the storage battery and the positive terminal, and a positive electrode of the first diode is connected to the positive electrode of the storage battery, and
the discharge limiting branch comprises a second diode and a fifth switch, the second diode and the fifth switch are connected in series between the positive electrode of the storage battery and the positive terminal, and a positive electrode of the second diode is connected to the positive electrode of the storage battery.

5. The energy storage battery according to claim 1, **characterized in that** each battery further comprises a precharge branch, and the precharge branch is connected in parallel with the first switch.

6. The energy storage battery according to claim 1, **characterized in that** the precharge branch comprises a precharge resistor and a third switch, and the precharge resistor and the third switch are connected in series between the positive electrode of the storage battery and the positive terminal.

7. The energy storage battery according to claim 1, **characterized in that** the energy storage battery adopts a controller area network (CAN) bus architecture to connect the plurality of battery groups, one battery from the plurality of battery groups is set as a master battery, and remaining batteries from the plurality of battery groups are set as slave batteries.

8. A method for balancing charge and discharge of an energy storage battery, **characterized in that** the method is applicable to the energy storage battery according to any one of claims 1 to 7, the method comprising:
activating the energy storage battery to enter a discharge mode; when detecting that the energy storage battery has fully discharged, switching the energy storage battery to a charge mode according to a seamless switching operation; when detecting that the energy storage battery is fully charged, switching the energy storage battery to a discharge mode according to the seamless switching operation;
after the energy storage battery enters the discharge mode, performing a discharge voltage balancing operation on the plurality of battery groups according to a first voltage, and performing a full discharge operation based on state of charge (SOC) values of all of the plurality of batteries in each battery group, wherein the first voltage is a maximum voltage among voltages of the battery groups in the energy storage battery that are not fault;
after the battery enters the charge mode, performing a charge voltage balancing operation on the plurality of battery groups according to a second voltage, and performing a full charge operation based on SOC values of all of the plurality of batteries in each battery group, wherein the second voltage is a minimum voltage among the voltages of the battery groups in the energy storage battery that are not fault.

9. The method for balancing charge and discharge of the energy storage battery according to claim 8, **characterized in that** the performing of the discharge voltage balancing operation on the plurality of battery groups according to the first voltage comprises:
determining a first voltage of the energy storage battery at present, wherein the first voltage is a maximum voltage among voltages of the battery groups in the energy storage battery that are not fault;
selecting, among battery groups in the plurality of battery groups that have not been powered on, second battery groups that satisfy a power-on condition based on the first voltage and a preset first voltage difference;
limiting a total charge or discharge current of the energy storage battery according to the number of currently online battery groups in the plurality of battery groups, and powering on the second battery groups; and
after the second battery groups have been powered on, cancelling the limiting of the total charge or discharge current of the energy storage battery, completing the discharge voltage balancing operation.

10. The method for balancing charge and discharge of the energy storage battery according to claim 8, **characterized in that** the performing of the charge voltage balancing operation on the plurality of battery groups according to the second voltage comprises:
determining a second voltage of the energy storage battery at present, wherein the second voltage is a minimum voltage among voltages of the battery groups in the energy storage battery that are not fault;
selecting, among battery groups in the plurality of battery groups that have not been powered on, third battery groups that satisfy a power-on condition based on the second voltage and a preset second voltage difference;
limiting a total charge or discharge current of the energy storage battery according to the number of currently online battery groups in the plurality of battery groups, and powering on the second battery groups; and
after the second battery groups have been powered on, cancelling the limiting of the total charge or discharge current of the energy storage battery, completing the charge voltage balancing operation.

11. A method for removing a fault in the energy storage battery, **characterized in that** the method is applicable to the energy storage battery according to any one of claims 1 to 7, the method comprising:
activating the energy storage battery to enter a discharge mode; when detecting that the energy storage battery has fully discharged, switching the energy storage battery to a charge mode according to a seamless switching operation; when detecting that the energy storage battery is fully charged, switching the energy storage battery to a discharge mode according to the seamless switching operation; and
after entering the discharge mode or the charge mode, when a faulty battery group is detected, performing a current limiting operation on battery groups in the plurality of battery groups other than the faulty battery group according to the number of battery groups in the plurality of battery groups that have been powered on and a first current threshold to limit a total charge or discharge current; and transmitting a power-down instruction to the faulty battery group, and subsequent to the faulty battery group being powered down, transmitting a current limiting cancellation instruction to each of the battery groups that have been powered on; wherein the faulty battery group is a battery group that has been powered on and has at least one battery with a major fault.

12. A method for seamlessly switching of charging and discharging of an energy storage battery, **characterized in that** the method is applicable to the energy storage battery according to any one of claims 1 to 7, the method comprising:
activating the energy storage battery to enter a discharge mode; when detecting that the energy storage battery has fully discharged, switching the energy storage battery to a charge mode according to a seamless switching operation; when detecting that the energy storage battery is fully charged, switching the energy storage battery to a discharge mode according to the seamless switching operation; and
wherein the seamless switching operation comprises: when detecting a first battery group that is in a powered-on state but does not satisfy a power-on condition, transmitting a control instruction to a first battery, wherein the first battery is a battery arranged as the first one among the plurality of batteries in the first battery group; adjusting the charge and discharge circuit by the first battery according to the control instruction and a switching operation, wherein the switching operation comprises transitioning from discharging to charging and transitioning from charging to discharging.

13. The method for seamlessly switching of charging and discharging of an energy storage battery according to claim 12, **characterized in that** the adjusting of the charge and discharge circuit by the first battery according to the control instruction and the switching operation comprises:
when the switching operation is transitioning from discharging to charging, closing the fifth switch of the first battery to access the charge limiting branch having the second diode, and opening the first switch; and
when the switching operation is transitioning from charging to discharging, closing the fourth switch of the first battery to access the discharge limiting branch having the first diode, and opening the first switch.

14. The method for seamlessly switching of charging and discharging of an energy storage battery according to claim 13, **characterized in that** the method further comprises a second power-on operation after the seamless switching operation, wherein the second power-on operation comprises:
closing the second switch of a third battery and the fifth switch of the first battery in each of the plurality of battery groups that meets the power-on condition; and
closing the second switch of the third battery and the first switch of the first battery in each of the plurality of battery groups that does not meet the power-on condition;
wherein the third battery is a battery arranged as the last one among the plurality of batteries in each battery group, and the first battery is a battery arranged as the first one among the plurality of batteries in each battery group.

15. A method for controlling an energy storage battery, **characterized in that** the method is applicable to the energy storage battery according to any one of claims 1 to 7, comprising:
receiving a power-on instruction, so that the master battery of each battery group performs a first power-on operation on all of the plurality of batteries of each battery group according to the power-on instruction, and entering a discharge mode after all of the plurality of batteries have been powered on; when detecting that the energy storage battery has fully discharged, entering a charge mode according to a seamless switching operation; when detecting that the energy storage battery has fully charged, entering a discharge mode according to the seamless switching operation.

16. The method for controlling the energy storage battery according to claim 15, **characterized in that** after the energy storage battery enters the discharge mode, a discharge voltage balancing operation is performed on the plurality of battery groups according to a first voltage; and a full discharge operation is performed based on state of charge (SOC)values of all of the plurality of batteries in each battery group; the first voltage is a maximum voltage among voltages of the battery groups in the energy storage battery that are not fault;
when entering the charge mode, a charge voltage balancing operation is performed on the plurality of battery groups according to a second voltage; and a full charge operation is performed based on SOC values of all of the plurality of batteries in each battery group, wherein the second voltage is a minimum voltage among the voltages of the battery groups in the energy storage battery that are not fault.

17. The method for controlling the energy storage battery according to claim 16, **characterized in that** the performing of the discharge voltage balancing operation on the plurality of battery groups according to the first voltage comprises:
determining a first voltage of the energy storage battery at present, wherein the first voltage is a maximum voltage among voltages of the battery groups in the energy storage battery that are not fault;
selecting, among battery groups in the plurality of battery groups that have not been powered on, second battery groups that satisfy a power-on condition based on the first voltage and a preset first voltage difference;
limiting a total charge or discharge current of the energy storage battery according to the number of currently online battery groups in the plurality of battery groups, and powering on the second battery groups; and
after the second battery groups have been powered on, cancelling the limiting of the total charge or discharge current of the energy storage battery, completing the discharge voltage balancing operation.

18. The method for controlling the energy storage battery according to claim 16, **characterized in that** the performing of the charge voltage balancing operation on each battery group according to the second voltage comprises:
determining a second voltage of the energy storage battery at present, wherein the second voltage is a minimum voltage among voltages of the battery groups in the energy storage battery that are not fault;
selecting, among battery groups in the plurality of battery groups that have not been powered on, third battery groups that satisfy the power-on condition based on the second voltage and a preset second voltage difference;
limiting a total charge or discharge current of the energy storage battery according to the number of currently online battery groups in the plurality of battery groups, and powering on the second battery group; and
after the second battery groups have been powered on, cancelling the limiting of the total charge or discharge current of the energy storage battery, completing the charge voltage balancing operation.

19. The method for controlling the energy storage battery according to claim 15, **characterized in that** after entering a discharge mode or a charge mode, when a faulty battery group is detected, a current limiting instruction is transmitted to battery groups in the plurality of battery groups other than the faulty battery group according to the number of battery groups in the plurality of battery groups that have been powered on and a first current threshold to limit a total charge or discharge current; and a power-down instruction is transmitted to the faulty battery group, and subsequent to the faulty battery group being powered down, and then a current limit cancellation instruction is transmitted to each of the battery groups that have been powered on; wherein the faulty battery group is a battery group that has been powered on and has at least one battery with a major fault.

20. The method for controlling the energy storage battery according to claim 15, **characterized in that** the seamless switching operation comprises:
when detecting a first battery group that is in a powered-on state but does not satisfy a power-on condition, transmitting a control instruction to a first battery, wherein the first battery is a battery arranged as the first one among the plurality of batteries in the first battery group; and
adjusting the charge and discharge circuit by the first battery according to the control instruction and a switching operation, wherein the switching operation comprises transitioning from discharging to charging and transitioning from charging to discharging.

21. The energy storage battery control method according to claim 20, **characterized in that** the adjusting, by the first battery, of the charge and discharge circuit by the first battery according to the control instruction and the switching operation comprises:
when the switching operation is transitioning from discharging to charging, closing the fifth switch (11) of the first battery to access the charge limiting branch having the second diode (13), and opening the first switch (5); and
when the switching operation is transitioning from charging to discharging, closing the fourth switch (10) of the first battery to access the discharge limiting branch having the first diode (12), and opening the first switch (5).
